# EUROPÄISCHE PATENTSCHRIFT

(11) **EP 2 746 753 B1**
(45) Veröffentlichungstag und Bekanntmachung des Hinweises auf die Patenterteilung: **25.02.2015**
(21) Anmeldenummer: 12199331.5
(22) Anmeldetag: 24.12.2012
(51) Int. Cl.: G01N 23/04, G01N 23/18

(54) **Anlage und Verfahren zur automatisierten Prüfung und/oder Vermessung einer Vielzahl im Wesentlichen identischer Bauteile mittels Röntgenstrahlung**
Device for the automated testing and/or measurement of a number of essentially identical components using x-ray radiation
Installation et procédé de vérification automatisée et/ou de mesure du nombre de composants essentiellement identifiés par rayonnement de radiographie

(43) Veröffentlichungstag der Anmeldung: 25.06.2014
(73) Patentinhaber: GE Sensing & Inspection Technologies GmbH, 31515 Wunstorf (DE)
(72) Erfinder: Wüstenbecker, Michael, 22952 Lütjensee (DE)
(74) Vertreter: Patentanwälte Bauer Vorberg Kayser

(56) Entgegenhaltungen:
- EP-A1- 2 278 305
- EP-A2- 2 253 947
- WO-A2-2004/008969
- DE-U1- 20 208 174

## Beschreibung

Die Erfindung betrifft eine Anlage zur automatisierten Prüfung und/oder Vermessung einer Vielzahl im Wesentlichen identischer Bauteile mittels Röntgenstrahlung, umfassend eine Prüfvorrichtung mit einem Träger, einem an dem Träger kontinuierlich rotierbar gelagerten Rotor und einer an dem Rotor angeordneten Röntgenvorrichtung, eine die Prüfvorrichtung umgebende Schutzkabine, eine Handhabungsvorrichtung zur Handhabung des Bauteils während der Prüfung, und eine Steuer-/Auswerteeinheit, die zur automatisierten Steuerung der Anlage sowie zur computertomographischen Auswertung der Röntgensignale eingerichtet ist. Die Erfindung betrifft des Weiteren ein Verfahren zum Betreiben einer solchen Anlage.

Derartige Anlagen werden beispielsweise zur automatischen seriellen Prüfung von Gussteilen verwendet, wobei die Vorrichtung in die Fertigungslinie des Herstellers eingebunden ist (inline-Prüfung).

Eine Anlage der eingangs genannten Art ist beispielsweise aus der EP 2 278 305 A1 bekannt. Zu prüfende Bauteile werden mittels eines sich durch die Prüfvorrichtung erstreckenden Bandförderers linear durch den Rotor geschoben. Die Querschnittsabmessungen des zu prüfenden Bauteils sind durch eine Reihe von Randbedingungen erheblich eingeschränkt. Erstens nimmt der Bandförderer bereits einen Teil des kreisförmigen lichten Querschnitts der Prüfvorrichtung ein, der somit für das Bauteil selbst nicht mehr zur Verfügung steht. Zweitens muss der Bandförderer eine gewisse Mindestbreite aufweisen, so dass aufgrund des kreisförmigen lichten Querschnitts der Prüfvorrichtung der Bandförderer nicht im untersten Bereich des lichten Querschnitts angeordnet sein kann, wodurch zusätzlich eine erhebliche Höhe verloren geht. Im Ergebnis steht für ein zu prüfendes Bauteil nur ein Bruchteil des eigentlichen lichten Querschnitts der Prüfvorrichtung zur Verfügung.

Auch eine medizinische CT-Anlage wie sie in WO 2004/008969 zur Beschreibung einer Methode zur Reduktion von Bewegungsartefakten in CT Bildgebungssystemen, wiedergegeben wird, umfasst eine Vorrichtung die es ermöglicht den Patienten innerhalb der Prüfvorrichtung linear zu bewegen. Diese Vorrichtung zur Untersuchung von Menschen ist jedoch auch den oben genannten Einschränkungen unterworfen.

Die Aufgabe der Erfindung besteht darin, eine zur inline-Prüfung von Bauteilen geeignete CT-Anlage und ein entsprechendes Verfahren bereitzustellen, die in der Prüfvorrichtung einen maximalen lichten Querschnitt für die zu prüfenden Bauteile bereitstellen.

Die Erfindung löst diese Aufgabe mit den Mitteln der unabhängigen Ansprüche. Die Handhabungsvorrichtung ist erfindungsgemäß zur Durchführung einer periodischen Hin- und Herbewegung zwischen einem Ladebereich und dem Prüfbereich eingerichtet. Es handelt sich somit um eine reziprozierende Handhabungsvorrichtung. Im Gegensatz zu einem durch die Prüfvorrichtung durchlaufenden Förderer stellt die erfindungsgemäße Handhabungsvorrichtung den gesamten lichten Querschnitt der Prüfvorrichtung für das Bauteil zu Verfügung, da das Bauteil erfindungsgemäß an einem universellen Stirnelement der Handhabungsvorrichtung aufgenommen werden kann, das für unterschiedliche und an das Bauteil anpassbare Aufnahme-/Haltemittel geeignet ist. Im Ergebnis ermöglicht die Erfindung die Prüfung von Bauteilen mit einer wesentlich größeren Querschnittsfläche im Vergleich zu einem durch die Prüfvorrichtung durchlaufenden Förderer. Überraschenderweise geht mit der Erfindung keine Verlängerung des Prüftakts einher, da sich herausgestellt hat, dass die Prüfvorrichtung nach jedem Prüfvorgang ohnehin eine gewisse Abkühlzeit benötigt, die ohne Zeitverlust für die Entladung des geprüften Bauteils und Laden des nächsten zu prüfenden Bauteils genutzt werden kann.

Vorteilhaft ist die Handhabungsvorrichtung auf der dem Ladebereich gegenüberliegenden Seite der Prüfvorrichtung bzw. Prüfebene gelagert. Dies hat den Vorteil, dass der Ladebereich frei von Aufbauten für die Lagerung der Handhabungsvorrichtung sein kann, so dass der gesamte Bauraum im Ladebereich insbesondere für Einrichtungen für die Be- und Entladung von Bauteilen zur Verfügung steht. Zudem kann die Handhabungsvorrichtung vorteilhaft im Wesentlichen vollständig im Inneren der Strahlenschutzkabine, d.h. gut geschützt, angeordnet sein. Durch dieses Merkmal unterscheidet sich die erfindungsgemäße Handhabungsvorrichtung beispielsweise von einem herkömmlichen Patiententisch für eine medizinische CT-Anlage, wo der Einstieg auf den Tisch immer auf der Seite des Tischsockels erfolgt.

Die Erfindung wird im Folgenden anhand vorteilhafter Ausführungsformen unter Bezugnahme auf die beigefügten Figuren erläutert. Dabei zeigt:
- Fig. 1:: eine Draufsicht von oben auf eine Anlage zur seriellen Röntgenprüfung von Bauteilen in einer Fertigungslinie;
- Fig. 2:: eine perspektivische Ansicht einer Röntgenprüfanlage;
- Fig. 3: eine schematische Querschnittsansicht einer Röntgenprüfanlage im Bereich der Röntgenvorrichtung;
- Fig. 4: eine perspektivische Ansicht eines Teils einer Handhabungsvorrichtung für eine Röntgenvorrichtung; und
- Fig. 5 bis 7: perspektivische Ansichten einer Röntgenprüfanlage zu unterschiedlichen Zeitpunkten des Prüfablaufs.

Die Anlage 10 umfasst eine Prüf-/Messvorrichtung 11, eine Handhabungsvorrichtung 60 zur Handhabung des Bauteils 12 insbesondere während der Röntgenprüfung in der Prüf-/Messvorrichtung 11, eine elektronische Steuer-/Auswerteeinheit 14 zur Steuerung der Anlage 10 und zur computertomographischen Auswertung der Röntgensignale, sowie eine die Prüf-/Messvorrichtung 11 umgebende Schutzkabine 15 zur Abschirmung der Umgebung gegenüber der von der Röntgenröhre 24 erzeugten Röntgenstrahlung, insbesondere mittels einer Röntgenstrahlung absorbierenden, beispielsweise Blei enthaltenden Schicht. Die programmierbare bzw. programmierte Steuer-/Auswerteeinheit 14 ist typischerweise in einem Bedienbereich 67 außerhalb der Strahlenschutzkabine 15 angeordnet und umfasst beispielsweise ein Bedienterminal 88.

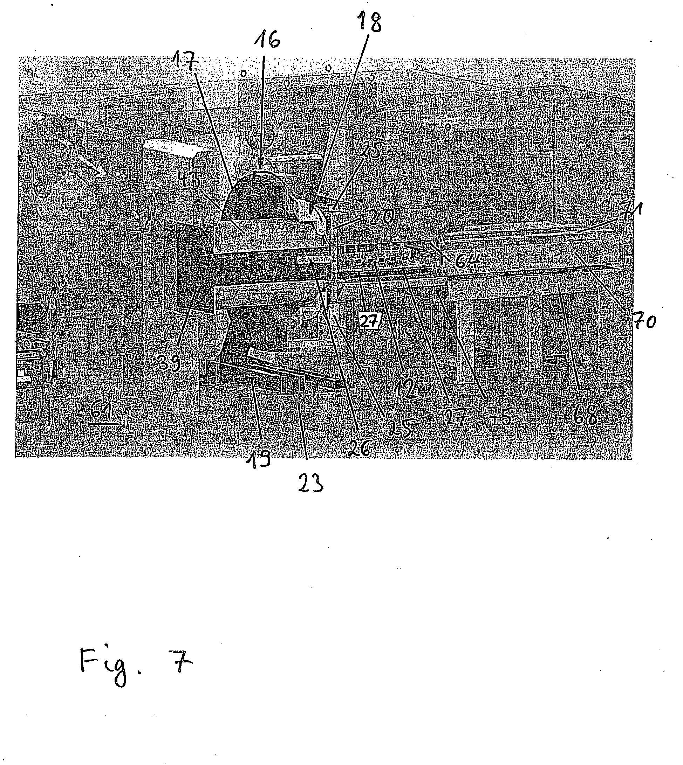

Die Prüf-/Messvorrichtung 11 umfasst einen während der Prüfung feststehenden Träger 17 und einen ringförmigen Rotor 18. Der Träger 17 umfasst ein auf einer Bodenplatte 23 verankertes Fußgestell 19. Der ringförmige Teil des Trägers 17 bildet ein ringförmiges Rotationslager für den Rotor 18 aus. Rotationslager, Rotor 18 und der ringförmige Teil des Trägers 17 bilden eine Ringeinheit 16, die eine zentrale Ringöffnung 26 (siehe Figur 7) zum Verschieben eines Bauteils 12 durch die Ringeinheit 16 während der Prüfung aufweist. Um eine horizontale Ausrichtung zu ermöglichen, kann die Ringeinheit 16 mittels eines horizontalen Schwenklagers beispielsweise in einem Bereich von +-30° gegenüber dem Fußgestell 19 neigbar sein. Das Bauteil 12 wird vorzugsweise axialparallel, d.h. parallel zu der Rotorachse, durch den Rotor 18 gefördert.

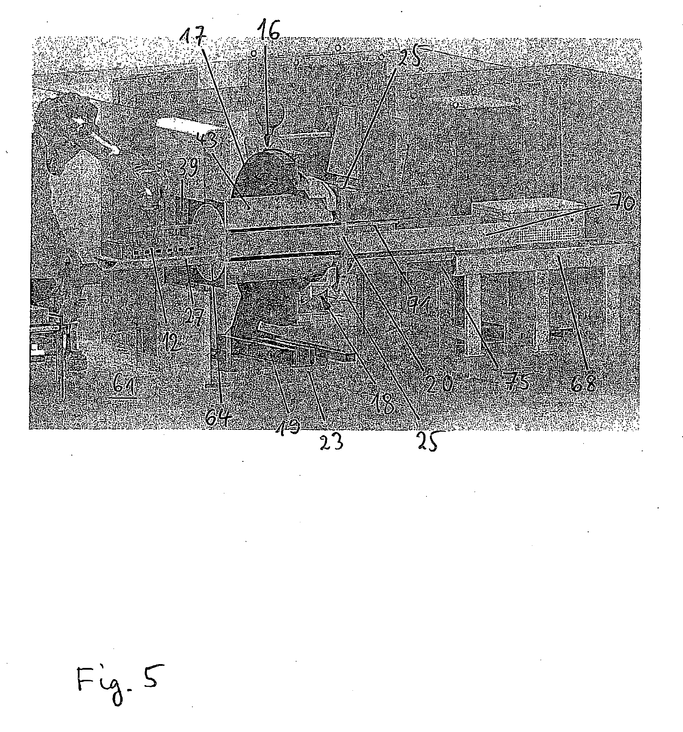

An dem Rotor 18 sind einander gegenüberliegend eine Röntgenröhre 24 und ein Röntgendetektor 25 befestigt. Die vorzugsweise als Drehanodenröhre ausgebildete Röntgenröhre 24 ist vorzugsweise zur Erzeugung eines Fächerstrahls 20 (fan beam) eingerichtet, siehe Figuren 5 bis 7. Die Röntgenröhre 24 kann alternativ vom Kegelstrahl- (cone beam) Typ sein. Die Röntgenröhre 24 ist zweckmäßigerweise zur Ausleuchtung des gesamten Detektors 25 mit Röntgenstrahlung 20 eingerichtet und weist zu diesem Zweck vorzugsweise in einer Richtung einen Strahlwinkel von mindestens 40°, vorzugsweise mindestens 60° auf. Zur Erzielung einer sub-mm Bildauflösung liegt die Fokusgröße des Röntgenstrahls vorzugsweise unterhalb von 1 mm, weiter vorzugsweise unterhalb von 0.7 mm. Die Röhre 24 wird vorzugsweise mit einer Energie von mindesten 80 kV, weiter vorzugsweise mindestens 100 kV, weiter vorzugsweise mindestens 120 kV, beispielsweise etwa 140 kV betrieben. Im Hinblick auf ein bevorzugtes hohes Durchdringungsvermögen sind höhere Röntgenenergien bis 450 kV denkbar. Zur Reduzierung der Prüf- bzw. Messdauer wird die Röntgenröhre 24 vorzugsweise mit einer Dauerleistung von mindestens 1 kW betrieben. Um Probleme aufgrund übergroßer Wärmeerzeugung zu vermeiden, beträgt die Dauerleistung vorzugsweise weniger als 10 kW. In einer nicht gezeigten Ausführungsform kann nur die Röhre 24 an dem Rotor 18 befestigt sein, während der stationäre Detektor 25 einen 360°-Ring ausbildet.

Der Röntgendetektor 25 ist insbesondere ein Halbleiterdetektor und vorzugsweise digital mit einer direkten Umwandlung der auftreffenden Röntgenstrahlung in elektrische Zählpulse (Counts). Es handelt sich vorzugsweise um einen Zeilendetektor mit einer Mehrzahl von vorzugsweise mindestens 16 parallelen Zeilen. Der Detektor 25 weist vorzugsweise eine ausreichende Länge auf, um einen möglichst großen Winkelbereich der von der Röhre 24 abgestrahlten Röntgenstrahlung zu erfassen. Er ist vorzugsweise bananenförmig gebogen, so dass die sensitive Fläche möglichst überall einen im Wesentlichen konstanten Abstand zu dem Quellpunkt der Röntgenröhre 24 aufweist. In den Figuren 5 bis 7 ist der bananenförmige Detektor 25 abgeschnitten, so dass hier nur die Enden des Detektors 25 sichtbar sind. Zur Erzielung einer sub-mm Bildauflösung beträgt die Pixelgröße des Detektors 25 höchstens 1 mm, vorzugsweise höchstens 0.7 mm.

Während der Röntgenprüfung eines Bauteils 12 wird der Rotor 18 mittels nicht gezeigter, an dem Träger 17 befestigter Rotationsantriebe kontinuierlich um die zentrale Längsachse der Ringeinheit 16 rotiert, wobei pro Bauteil 12 eine Vielzahl von vollständigen 360°-Umdrehungen des Rotors 18 durchgeführt werden. Die elektrische Versorgung der mit dem Rotor 18 rotierenden Röntgenröhre 24 und Röntgendetektor 25 erfolgt von einer Hochspannungsversorgungseinheit 79 mittels einer zwischen dem Rotor 18 und dem Träger 17 angeordneten Schleifringanordnung. Die Rotationsachse des Rotors 18 bzw. die Längsachse der Ringeinheit 16 ist vorteilhaft parallel zur Translationsrichtung des Bauteils 12 durch die Prüf-/Messvorrichtung 11, vorzugsweise im Wesentlichen horizontal, ausgerichtet.

Die Anlage 10 ist beispielsweise an einer Fördervorrichtung 13, beispielsweise einem Rollen- oder Bandförderer, zum seriellen Zu- und Abfördern einer Vielzahl im Wesentlichen gleichartiger zu prüfender Bauteile 12 angeordnet. Die Fördervorrichtung 13 ist vorzugsweise als Förderstrasse, d.h. als translatorischer Förderer ausgebildet und kann beispielsweise Teil einer Fertigungslinie sein.

Die Anlage 10 umfasst beispielsweise eine Ladevorrichtung 22, die hier als Roboter ausgeführt ist. Andere Ausführungsformen der Ladevorrichtung 22 sind möglich. Die Ladevorrichtung 22 dient dazu, ein zu prüfendes Bauteil 12 von dem Förderer 13 abzunehmen, an die Handhabungsvorrichtung 60 zur Prüfung zu übergeben (Beladung der Prüfvorrichtung 11), nach der Prüfung das Bauteil 12 von der Handhabungsvorrichtung 60 zu übernehmen (Entladung der Prüfvorrichtung 11) und auf dem Förderer 13 zum Abtransport abzulegen. Die Ladevorrichtung 22 kann entbehrlich sein, insbesondere wenn die Handhabungsvorrichtung 60 selbst zum Abnehmen und Ablegen zu prüfender Bauteile 12 von bzw. auf der Fördervorrichtung 13 eingerichtet ist. Be- und Entladung der Handhabungsvorrichtung 60 kann auch auf andere Weise, beispielsweise manuell, erfolgen.

Zum Ein- und Ausführen der Bauelemente 12 in die bzw. aus der Schutzkabine 15 ist eine Ladeöffnung 39 in der Schutzkabine 15 vorgesehen, die während der Röntgenprüfung beispielsweise mittels eines nicht gezeigten Schiebers strahlensicher verschließbar ist, so dass Strahlenschutz jederzeit gewährleistet ist.

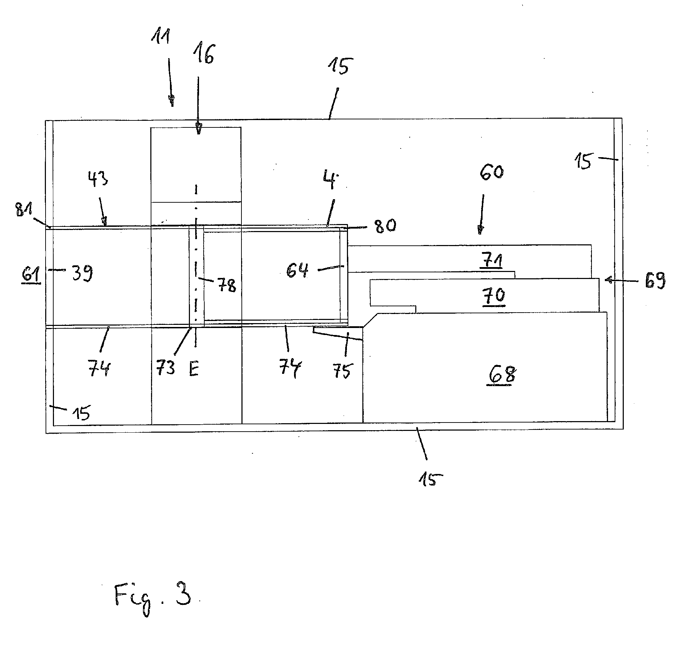

Durch den Rotor 18 ist vorzugsweise ein Rohr 43 geführt, insbesondere um die Prüfvorrichtung 11 und die Ringeinheit 16 vor Verschmutzungen infolge des Einbringens der Bauteile 12, aber beispielsweise auch vor Beschädigung durch fehlpositionierte Bauteile 12 zu schützen. Das Rohr 43 definiert einen Transporttunnel für das zu prüfende Bauteil 12. Das Rohr 43 erstreckt sich vorzugsweise von der Ladeöffnung 39 durch die Prüfvorrichtung 11, d.h. durch die Ringöffnung 26 der Ringeinheit 16, und um eine Mindestlänge über die Prüfvorrichtung 11 hinaus, die dadurch definiert ist, dass die Platte 64 in der am weitesten zurückgezogenen Position (siehe Figur 3) sich noch im Innern des Rohrs 43 befindet. Beispielsweise kann das Rohr 43 in beiden Richtungen gleich weit über die Prüfvorrichtung 11 überstehen, d.h. symmetrisch in Bezug auf die Prüfebene E angeordnet sein wie beispielsweise in Figur 3. Die Prüfebene E ist dabei die Ebene, die senkrecht zur Rotorachse 18 und zentral durch die Röntgenstrahlung verläuft, d.h. in der die stärkste Röntgenintensität vorliegt. Der Durchmesser des Rohrs 43 ist zweckmäßigerweise an den Innendurchmesser der Ringeinheit 16 angepasst, um die Prüfung möglichst großer Bauteile 12 zu ermöglichen.

Das Rohr 43 ist vorzugsweise an seinem vorderen Ende, d.h. im Bereich der Ladeöffnung 39 an der Kabine 15 befestigt. Die ladeseitige Öffnung des Rohrs 43 bildet somit vorteilhaft die Ladeöffnung 39 in der Kabine 15. Vorzugsweise ist das Rohr 43 an seinem vorderen Ende luftdicht mit der Kabine 15 an der die Ladeöffnung 39 definierenden Kante verbunden, insbesondere mithilfe eines ringförmigen Dichtelements 81. An seinem hinteren Ende kann das Rohr 43 beispielsweise an dem Sockel 68 gehalten sein, beispielsweise mittels an dem Sockel 68 befestigter Träger 75.

Das Rohr 43 ist mindestens in Bereich, in dem es Röntgenstrahlung ausgesetzt ist, strahlentransparent. Vorzugsweise ist das Rohr 43 aus mehreren Abschnitten zusammengesetzt, nämlich einem zentralen strahlentransparenten Abschnitt 73 im Bereich der Röntgenstrahlung und einem oder mehreren, insbesondere zwei Abschnitten 74 außerhalb des Bereichs der Röntgenstrahlung, die demnach nicht strahlentransparent ausgeführt sein müssen und daher aus kostengünstigerem Material und stabiler ausgeführt sein können. Insbesondere die Rohrabschnitte 74 können zwecks besserer Demontierbarkeit zu Wartungszwecken beispielsweise als Halbschalen ausgeführt sein. Das Rohr 43 ist vorzugsweise frei von Öffnungen in der Rohrwand, so dass Schmutzpartikel insbesondere nicht vom Bauteil 12 in die Prüf-/Messvorrichtung 11 gelangen können.

Die Handhabungsvorrichtung 60 dient vorteilhaft zum Transport eines zu prüfenden Bauteils 12 von einem Ladebereich 61, der sich außerhalb der Strahlenschutzkabine 15 vor der Ladeöffnung 39 befindet, in den Prüfbereich in der Prüf-/Messvorrichtung 11, zur Handhabung des Bauteils 12 insbesondere während der Röntgenprüfung in der Prüf-/Messvorrichtung 11, und zum Transport von dem Prüfbereich zurück zu dem (Ent-)Ladebereich 61. Mit anderen Worten findet sowohl die Beladung der Handhabungsvorrichtung 60 mit einem zu prüfenden Bauteil 12 als auch die Entladung der Handhabungsvorrichtung 60 in demselben Ladebereich 61, d.h. vorteilhaft auf der gleichen Seite der Prüfvorrichtung 11 bzw. der Prüfebene E statt.

Die Handhabungsvorrichtung 60 umfasst einen bodenfesten Sockel 68, beispielsweise ein Sockelgestell (siehe Figur 3), und eine auf dem Sockel 68 axial verschiebbare Verschiebeeinheit 69. Axial ist im Rahmen der vorliegenden Anmeldung auf die Achse des Rotors 18 bezogen. Der Sockel 68 ist vorteilhaft auf der dem Ladebereich 61 gegenüberliegenden Seite der Prüfvorrichtung 11 bzw. der Prüfebene E, und vorzugsweise in der Strahlenschutzkabine 15 angeordnet. Die Verschiebeeinheit 69 umfasst mindestens ein, vorzugsweise eine Mehrzahl, hier zwei relativ zueinander verschiebbare Linearelemente 70, 71. Insbesondere ist ein erstes der Linearelemente 70 auf dem Sockel 68 axial verschiebbar gelagert und das andere Linearelement 71 auf dem ersten Linearelement 70 axial verschiebbar gelagert. Die Länge der Verschiebeeinheit 60 ist daher teleskopartig veränderbar. Die axiale Verschiebbarkeit der Linearelemente 70, 71 kann insbesondere mittels entsprechender Linearführungen realisiert sein.

Die Verwendung einer Mehrzahl von Linearelementen 70, 71 kann vorteilhaft dazu dienen, die Funktionen des Transports des Bauteils 12 zwischen dem Ladebereich 61 und dem Prüfbereich zu trennen von der Verschiebung des Bauteils 12 durch den Prüfbereich während der Röntgenprüfung. Insbesondere kann die Verschiebung des Linearelements 71 relativ zu dem Linearelement 70 zur hochgenauen, jedoch vergleichsweise langsamen Verschiebung des Bauteils 12 durch den Prüfbereich in der Prüf-/Messvorrichtung 11 während der Röntgenprüfung dienen. Die Verschiebung des Linearelements 70 relativ zu dem Sockel 68 kann beispielsweise zum Transport eines zu prüfenden Bauteils 12 von dem Ladebereich 61 in den Prüfbereich 78 und zum Transport von dem Prüfbereich 78 zurück zu dem (Ent-)Ladebereich 61 dienen. Dieser Transport muss nicht mit derselben hohen Genauigkeit erfolgen und kann daher schneller und mittels eines kostengünstigeren Antriebs durchgeführt werden.

Zur Erzielung einer sub-mm-Auflösung ist die Handhabungsvorrichtung 60 vorteilhaft zur Förderung der Bauteile 12 durch den Prüfbereich 78 mit im Wesentlichen konstanter Vorschubgeschwindigkeit eingerichtet, d.h. mit Schwankungen in der Vorschubgeschwindigkeit unterhalb von 10%, vorzugsweise unterhalb von 5%, weiter vorzugsweise unterhalb von 1%. Zu diesem Zweck umfasst die Linearführung zwischen den Linearelementen 70, 71 vorzugsweise einen entsprechend genau gesteuerten oder geregelten Antrieb, vorzugsweise mit Linear- bzw. Servomotor, zur Erzielung der geforderten Konstanz in der Vorschubgeschwindigkeit. Der Antrieb 34 für die Linearführung zwischen dem Linearelement 70 und dem Sockel 68 für den An- und Abtransport des Bauteils 12 vor bzw. nach der Röntgenprüfung muss nach dem zuvor Gesagten nicht dieselbe hohe Geschwindigkeitskonstanz bereitstellen und kann daher kostengünstiger ausgeführt sein.

An der der Prüfvorrichtung 11 zugewandten Stirnseite der Verschiebeeinheit 69, hier an der Stirnseite des Linearelements 71, ist eine vertikal orientierte Platte 64 befestigt. Die Form der Platte 64 entspricht vorzugsweise der Form des lichten Querschnitts der Ringeinheit 16 bzw. des Rohrs 43. Im vorliegenden Fall eines im Querschnitt (kreis-)runden Rohrs 43 ist daher auch die Platte 64 vorteilhaft kreisrund. Vorzugsweise ist der Außendurchmesser der Platte 64 an den Innendurchmesser der Ringeinheit 16 bzw. des Rohrs 43 angepasst. Vorzugsweise füllt daher die Platte 64 den lichten Querschnitt des Rotors 18 bzw. des Rohrs 43 im Wesentlichen vollständig aus, d.h. insbesondere bis auf einen Spalt zwischen der Platte 64 und dem Rohr 43, der vorzugsweise mittels eines ringförmigen Dichtelements 80 luftdicht abgedichtet ist.

An der Vorderseite der Platte 64, d.h. an der der Ladeöffnung 39 zugewandten und dem Sockel 68 abgewandten Seite, ist das Werkstück 12 angeordnet bzw. gehalten. Wie beispielsweise aus Figur 3 ersichtlich ist, steht dem Werkstück 12 grundsätzlich der gesamte lichte Querschnitt der Ringeinheit 16 bzw. des Rohrs 43 zur Verfügung.

Vorzugsweise ist an der Vorderseite der Platte 64 ein Aufnahme- oder Haltemittel zum Aufnehmen bzw. Halten des Werkstücks 12 vorgesehen. Das Aufnahme- oder Haltemittel kann vielfältig ausgeführt sein. Im Ausführungsbeispiel der Figuren handelt es sich beispielsweise um eine Auflage 27, die an der Platte 64 befestigt ist und eine ebene Tragoberfläche 77 aufweist, auf dem das Bauteil 12 aufliegt. Zwar nimmt die Auflage 27 einen gewissen Raum ein, jedoch kann die Auflage 27 und seine insbesondere vertikale Anordnung an das zu prüfende Bauteil 12 angepasst sein, so dass immer noch wesentlich mehr Raum für das zu prüfende Bauteil 12 zur Verfügung steht als im Stand der Technik. Die Form der Auflage 27 ist variabel.

Alternativ kann das Aufnahme- oder Haltemittel beispielsweise ein/e an der Vorderseite der Platte 64 vorgesehene/r bzw. befestigte/r oder befestigbare/r Klemmaufnahme, Greifwerkzeug, Einrichtung zum Einhängen des Bauteils 12 in die Platte 64, nach oben offener Aufnahmebehälter zum Einlegen des Bauteils 12, Greifer bspw. mit einer Mehrzahl auf der gleichen Höhe angeordneter Finger, etc. sein. Hier sind vielfältige Variationen möglich. Auch eine magnetische oder elektromagnetische Aufnahme insbesondere für ferromagnetische Bauteile, beispielsweise in Form einer magnetischen Platte 64, ist denkbar. Vorteilhaft ist das Aufnahme-/Haltemittel an das jeweils zu prüfende Bauteil 12 anpassbar. Das Aufnahme-/Haltemittel ist daher vorzugsweise ein Adapterteil. Das Aufnahme-/Haltemittel ist des Weiteren vorteilhaft von der Platte 64 abnehmbar und beispielsweise durch ein anderes Aufnahme-/Haltemittel ersetzbar. Das Aufnahme- oder Haltemittel ist vorteilhaft im Wesentlichen transparent für Röntgenstrahlung, um die Abbildung des Bauteils 12 möglichst wenig zu beeinflussen.

Das Halteteil 27 bzw. allgemeiner das Aufnahme-/Haltemittel kann vorzugsweise höhenverstellbar sein. Zu diesem Zweck ist eine beispielsweise elektrisch angetriebene Höhenverstelleinrichtung 63 vorgesehen, die vorzugsweise an der Platte 64, insbesondere deren Rückseite, angebracht ist. Insbesondere ist das Halteteil 27 an der Handhabungsvorrichtung 60 bzw. der Platte 64 vertikal verschiebbar geführt. Die Höhenverstelleinrichtung 63 umfasst beispielsweise eine oder mehrere vertikal angeordnete Linearführungen 65 und einen Elektroantrieb 66 nebst einem entsprechenden Getriebe. Durch die Höhenverstellbarkeit ist das Halteteil 27 beispielsweise an Bauteile 12 mit unterschiedlichen Abmessungen anpassbar, damit eine im Wesentlichen mittige Durchführung der Bauteile 12 durch die Ringeinheit 16 sichergestellt werden kann.

Des Weiteren kann das höhenverstellbare Halteteil 27 gegebenenfalls als Ladevorrichtung 22 dienen. Beispielsweise kann das abgesenkte Halteteil 27 unter ein auf dem Förderer zugefördertes Bauteil 12 gefahren werden. Durch Anheben des Halteteils 27 wird dieses vom Förderer 13 abgenommen und kann dann geprüft werden. Nach der Prüfung wird das Halteteil 27 mit dem Bauteil 12 über den Förderer gefahren und zur Ablage auf dem Förderer 13 abgesenkt und sodann abgefördert.

Allgemein kann das das Aufnahme-/Haltemittel vorteilhaft relativ zu der Platte 64 um eine oder mehrere Achsen verschiebbar und/ rotierbar sein. Beispielsweise kann das das Aufnahme-/Haltemittel vorteilhaft entlang der Achse des Rotors 18 verschiebbar oder teleskopartig längenverstellbar sein, etwa um eine zum Be-/Entladen des Förderers 13 ausreichende Reichweite zu erzielen. Eine separate Ladevorrichtung 22 kann dann gegebenenfalls entbehrlich sein.

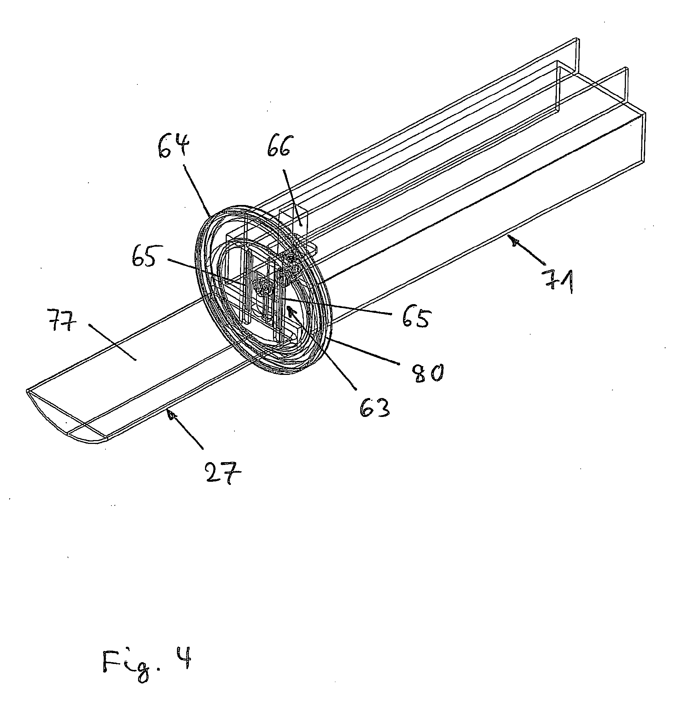

An der Rückseite der Platte 64, d.h. an der der Ladeöffnung 39 abgewandten und dem Sockel 68 zugewandten Seite, steht erfindungsgemäß ebenfalls ein maximaler Bauraum zur Verfügung. Aus diesem Grund kann beispielsweise das Linearelement 71 vorteilhaft sehr stabil ausgeführt sein. Dies ist beispielsweise aus Figur 4 ersichtlich, wo das Linearelement 71 vorteilhaft die Form eines doppelten U-Profils mit aneinanderliegenden Basisschenkeln aufweist. Auch beispielsweise für die Höhenverstelleinrichtung 63 und andere Funktionseinrichtungen ist an der Rückseite der Platte 64 viel Raum, insbesondere wenn das Linearelement 71 vorteilhaft ein Profil ist.

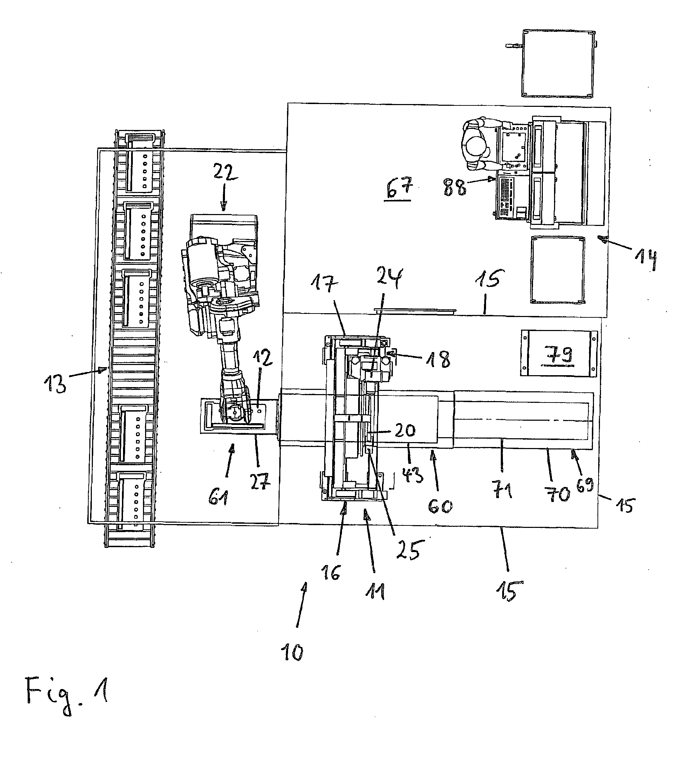

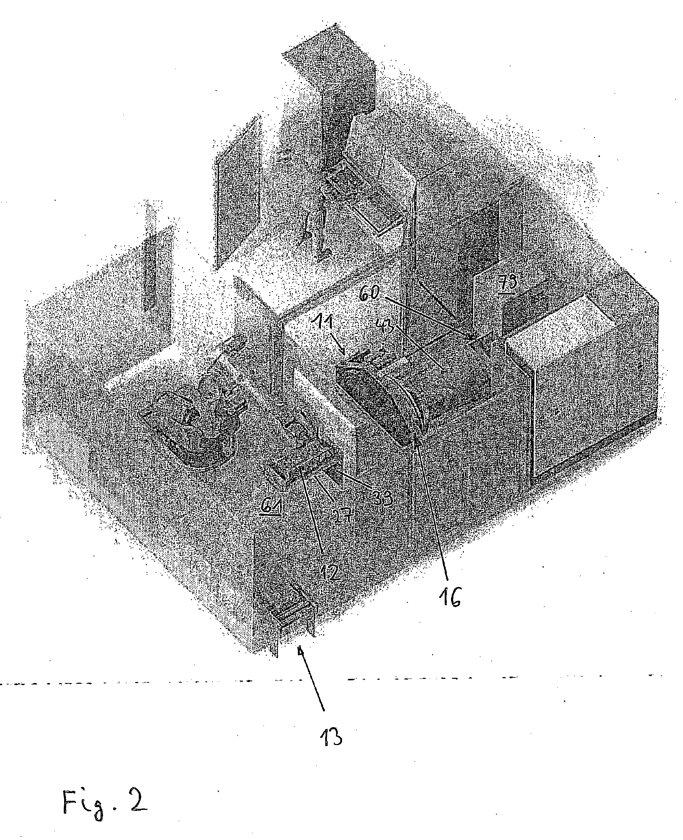

Der Ablauf des Prüfvorgangs ist wie folgt. Ein zu prüfendes Bauteil 12 wird beispielsweise von der Ladevorrichtung 22 von dem Förderer 13 abgenommen und auf der Auflage 27 der Handhabungsvorrichtung 60 abgelegt bzw. allgemeiner der Handhabungsvorrichtung 60 übergeben. Die Handhabungsvorrichtung 60 befindet sich zu diesem Zeitpunkt in der Ladestellung, in der die Verschiebeeinheit 69 am weitesten zum Ladebereich 61 hin vorgeschoben ist und der Bereich vor der Platte 64, in dem das Bauteil anzuordnen ist (d.h. das Aufnahme-/Haltemittel, hier die Auflage 27), sich außerhalb der Schutzkabine 15 befindet. Insbesondere kann in dieser Position, die in den Figuren 1, 2 und 5 gezeigt ist, die Platte 64 etwa bündig mit dem vorderen Ende des Rohrs 64 abschließen.

Anschließend wird die Platte 64 mit dem Bauteil 12 durch Verschieben des Linearelements 70 bzw. der gesamten Verschiebeeinheit 69 entlang des Sockels 68 zurückgezogen, bis das Bauteil 12 kurz vor dem Erreichen des Röntgenstrahls ist. Dann wird die Verschiebung des Linearelements 70 bzw. der Verschiebeeinheit 69 gestoppt und der Transport des Bauteils in den Prüfbereich 78 ist abgeschlossen.

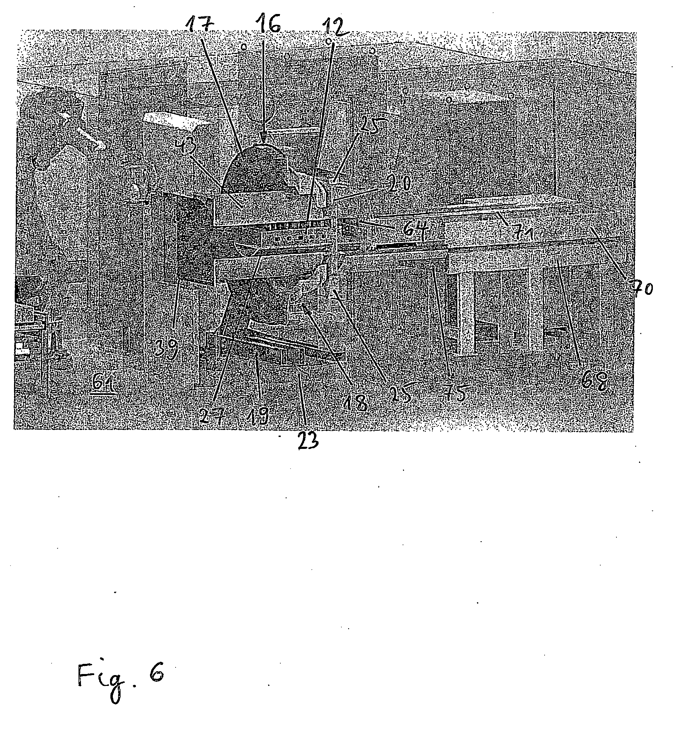

Danach wird die Platte 64 mit dem Bauteil 12 durch Verschieben des Linearelements 71 entlang des Linearelements 70 mit hochkonstanter, jedoch gegebenenfalls geringerer Geschwindigkeit weiter zurückgezogen und durch den Prüfbereich 78 gefahren, wobei das Bauteil 12 durch den Röntgenstrahl 20 läuft und Röntgenbilder aufgenommen werden. Ein Zeitpunkt während der Röntgenprüfung ist in Figur 6 dargestellt.

Wenn das Bauteil 12 den Röntgenstrahl 20 bzw. den Prüfbereich 78 verlassen hat, wird die Verschiebung des Linearelements 71 gestoppt und die Röntgenprüfung des Bauteils ist abgeschlossen. Dieser Zeitpunkt ist in Figur 7 dargestellt. Hier ist die Handhabungsvorrichtung 60 am weitesten zurückgezogen.

Anschließend wird die Platte 64 mit dem Bauteil 12 durch Verschieben des Linearelements 70 bzw. der gesamten Verschiebeeinheit 69 entlang des Sockels 68 mit erhöhter Transportgeschwindigkeit vorgeschoben, bis der in den Figuren 1, 2 und 5 gezeigte Entladezustand erreicht ist. Da die Platte 64 vorteilhaft gegenüber dem Rohr 43 mittels einer Ringdichtung 80 abgedichtet ist, schiebt dabei die Platte 64 etwaige Verschmutzungen nach jedem Prüfvorgang vorteilhaft aus dem Rohr 43 heraus. Das geprüfte Bauteil 12 wird beispielsweise von der Ladevorrichtung 22 von der der Handhabungsvorrichtung 60 abgenommen und auf dem Förderer 13 zum Abfördern abgelegt und das nächste zu prüfende Bauteil 12 zugefördert.

Aufgrund der während der Prüfung erfolgenden translatorischen Verschiebung des zu prüfenden Bauteils 12 durch die Prüf-/Messvorrichtung 11 entlang der Rotationsachse des Rotors 18 und der gleichzeitigen kontinuierlichen Rotation des Röntgensystems 24, 25 um das zu prüfende Bauteil 12 ergibt sich insgesamt eine helixartige Bewegung des Röntgensystems 24, 25 um das zu prüfende Bauteil 12. Eine Rotation des Bauteils 12 insbesondere um eine vertikale Achse, oder eine Verschiebung um eine weitere Achse, findet während der Röntgenuntersuchung nicht statt. Ein zusätzlicher Manipulator für das Bauteil 12 wie beispielsweise ein Drehteller ist entbehrlich.

Die Steuer-/Auswerteeinheit 14 umfasst einen schnellen CT-Rekonstruktionsalgorithmus, um die aufgenommenen Röntgendaten von der Helixgeometrie in eine Volumen- bzw. Voxeldarstellung zu überführen. Die Steuer-/Auswerteeinheit 14 umfasst weiterhin einen Algorithmus zur Analyse des Volumenbildes je nach vorgesehener Anwendung. Die computertomographische Auswertung der Röntgensignale ermöglicht es in an sich bekannter Weise, Informationen über die dreidimensionale innere Struktur der Bauteile, beispielsweise die genaue Lage und Form von Gaseinschlüssen in Gussteilen, zu erhalten. Dies kann insbesondere eine automatische Erkennung von inneren Materialdefekten oder Anomalien wie Gaseinschlüssen, Porositäten sowie Einschlüsse von Materialien höherer Dichte in einem im Wesentlichen homogenen Werkstoff des Bauteils 12 sein, die anhand vorbestimmter Prüfparameter ermittelt werden. Jedes Bauteil kann gegebenenfalls als "regulär" oder "irregulär" eingestuft und optional entsprechend optisch markiert oder automatisch aussortiert werden. Schließlich kann die Steuer-/Auswerteeinheit 14 eine Kommunikationseinheit zur Datenübertragung mit einer externen Einheit, beispielsweise der Steuerzentrale der Fertigungsanlage, aufweisen. Mittels der Anlage 10 kann eine automatische serielle Untersuchung von Bauteilen 12 in einer kurzen Zeitdauer, die mit den Taktzeiten in einer Fertigungslinie verträglich ist, erfolgen.

Zusätzlich oder alternativ zu dem schraubenförmigen Scan-Modus kann die Steuer-/Auswerteeinheit 14 auch die Durchführung von Axialscans und/oder Scans von lediglich einem Teil eines Bauteils 12, z.B. einzelner Scheiben oder an bestimmten Positionen, durchführen.

Alternativ oder zusätzlich zur Erkennung innerer Defekte oder Anomalien des Bauteils 12 kann die Steuer-/Auswerteeinheit 14 auch zur Bestimmung der dreidimensionalen geometrischen Abmessungen der Bauteile 12, d.h. innerer und äußerer Bauteilstrukturen, aus den Röntgendaten eingerichtet sein. Auf eine separate Koordinatenmessvorrichtung kann dann gegebenenfalls verzichtet werden.

Die zweckmäßigerweise in der Steuer-/Auswerteeinheit 14 durchgeführte Korrektur zur Kompensation des Röntgenstrahlhärtungs-(beam hardening) Effekts ist auf die Untersuchung typischer Werkstoffe, bspw. Metalle, Legierungen, Verbundwerkstoffe, Aluminium, Eisen, etc. abgestimmt.

Die Anlage 10 ist abgegrenzt gegenüber Vorrichtungen zur Prüfung von Gepäckstücken, deren Auswertung außerordentlich breit auf beliebige Gepäckstückinhalte eingestellt sein muss. Dagegen kann die erfindungsgemäße Vorrichtung zur Untersuchung einer Vielzahl im Wesentlichen identischer Bauteile zweckmäßigerweise maßgeschneidert auf den zu prüfenden Bauteiltyp, oder einen Mix einer begrenzten Zahl von Bauteiltypen, eingestellt sein. Diese Vorrichtungen sind daher insbesondere hinsichtlich der Röntgenparameter und der Auswertealgorithmen vollkommen unterschiedlich ausgeführt. Vorzugsweise ist die Anlage zur Erzielung einer Volumen-Auflösung im Röntgenbild von kleiner oder gleich 1 mm eingerichtet. Auch hierdurch ist die Erfindung gegenüber Vorrichtungen zur Prüfung von Gepäckstücken abgrenzbar, die in der Regel mit einer Auflösung von einigen mm arbeiten.

Die erfindungsgemäße Vorrichtung kann zusätzlich oder alternativ zur Werkstoffprüfung zur Vermessung von inneren und äußeren Bauteilstrukturen (Metrologie) verwendet werden. Auf eine separate Koordinatenmessvorrichtung kann dann gegebenenfalls verzichtet werden.

Um das Eindringen von Staub und Feuchtigkeit in die Schutzkabine 15 zu verhindern, ist diese vorzugsweise vollständig abgeschlossen bzw. abgedichtet, abgesehen beispielsweise von etwaigen Klimatisierungsöffnungen. Dies gelingt vorteilhaft durch die Abdichtung des Rohrs 43 gegenüber der Kabine 15 im Bereich der Ladeöffnung 39 insbesondere mittels einer Ringdichtung 81, sowie durch die Abdichtung der Platte 64 gegenüber dem Rohr 43, insbesondere ebenfalls mittels einer Ringdichtung 80. Demnach ist die Prüf-/Messvorrichtung 11 im Wesentlichen vollständig gekapselt in der Schutzkabine 15 angeordnet.

Um die im Betrieb der Prüf-/Messvorrichtung 11 erzeugte Wärme abzuführen und den Innenraum der Schutzkabine 15 auch in sehr warmen Umgebungen, z.B. einer Gießerei, auf einer hinreichend niedrigen Betriebstemperatur zu halten, ist an der Schutzkabine 15 vorzugsweise ein temperaturgeregeltes, insbesondere elektrisch betriebenes Kühlaggregat, beispielsweise eine Klimaanlage, angebracht. Damit im Falle etwaiger Undichtigkeiten, sowie durch etwaige Funktionsöffnungen wie beispielsweise einer Abluftöffnung für die Klimaanlage, kein Staub oder Feuchtigkeit in die Schutzkabine 15 gelangen kann, ist vorzugsweise eine Einrichtung zur Überdruckbeaufschlagung der Kabine 15 vorgesehen. Dabei kann es sich beispielsweise um einen Druckluftanschluss handeln, der über eine Druckluftleitung mit einer externen Druckluftquelle verbindbar ist. Die Überdruckbeaufschlagung kann alternativ auch über das Kühlaggregat erfolgen.

## Patentansprüche

1. Anlage (10) zur automatisierten seriellen Prüfung und/oder Vermessung einer Vielzahl im Wesentlichen identischer Bauteile (12) mittels Röntgenstrahlung, umfassend eine Prüfvorrichtung (11) mit einem Träger (17), einem an dem Träger (17) kontinuierlich rotierbar gelagerten Rotor (18) und einer an dem Rotor (18) angeordneten Röntgenvorrichtung (24, 25), eine die Prüfvorrichtung (11) umgebende Schutzkabine (15), eine Handhabungsvorrichtung (60) zur Handhabung eines Bauteils (12) während der Röntgenprüfung, und eine Steuer-/Auswerteeinheit (14), die zur automatisierten Steuerung der Anlage (10) sowie zur computertomographischen Auswertung der Röntgensignale eingerichtet ist, **dadurch gekennzeichnet, dass** die Handhabungsvorrichtung (60) zur periodischen Hin- und Herbewegung zwischen einem Ladebereich (61) und einem Prüfbereich (78) eingerichtet ist und ein vertikal orientiertes Stirnelement, z.B. eine Platte (64), mit einem daran angeordneten Aufnahme- und/oder Haltemittel aufweist, an dem das Bauteil (12) stirnseitig anordbar ist.

2. Anlage nach Anspruch 1, **dadurch gekennzeichnet, dass** die Handhabungsvorrichtung (60) auf der dem Ladebereich (61) gegenüberliegenden Seite der Prüfvorrichtung (11) bzw. Prüfebene E gelagert ist.

3. Anlage nach Anspruch 1 oder 2, **dadurch gekennzeichnet, dass** das Stirnelement plattenförmig ist.

4. Anlage nach einem der vorhergehenden Ansprüche, **dadurch gekennzeichnet, dass** das Aufnahme-/Haltemittel eine Auflage (27) für das Bauteil umfasst.

5. Anlage nach einem der vorhergehenden Ansprüche, **dadurch gekennzeichnet, dass** das Aufnahme-/Haltemittel eine Klemmaufnahme und/oder ein Greifwerkzeug zum Greifen des Bauteils und/oder einen Greifer umfasst.

6. Anlage nach einem der vorhergehenden Ansprüche, **dadurch gekennzeichnet, dass** das Aufnahme-/Haltemittel gegenüber dem Stirnelement höhenverstellbar ist.

7. Anlage nach einem der vorangehenden Ansprüche, umfassend ein sich durch den Rotor (18) erstreckendes Rohr (43), **dadurch gekennzeichnet, dass** sich das Stirnelement im Wesentlichen über den gesamten Querschnitt des Rohrs (43) erstreckt.

8. Anlage nach einem der vorangehenden Ansprüche, **dadurch gekennzeichnet, dass** das Stirnelement an seinem Außenumfang ein insbesondere ringförmiges Dichtelement (80) aufweist.

9. Anlage nach einem der vorangehenden Ansprüche, **dadurch gekennzeichnet, dass** die Handhabungsvorrichtung (60) auf der dem Ladebereich (61) gegenüberliegenden Seite der Prüfvorrichtung (11) bzw. Prüfebene E gelagert ist.

10. Anlage nach einem der vorangehenden Ansprüche, **dadurch gekennzeichnet, dass** die Handhabungsvorrichtung (60) einen ersten bewegbaren Abschnitt (70) zum Fördern des Bauteils zwischen dem Ladebereich (61) und dem Prüfbereich (78) und einen zweiten, unabhängig bewegbaren Abschnitt (71) zur axialen Verschiebung von Bauteilen (12) durch den Prüfbereich (78) während der Prüfung aufweist.

11. Anlage nach Anspruch 10, **dadurch gekennzeichnet, dass** die Länge der Verschiebeeinheit (60) mittels der verschiebbaren Abschnitte (70, 71) teleskopartig veränderbar ist.

12. Anlage nach einem der vorangehenden Ansprüche, wobei die die Steuer-/Auswerteeinheit (14) zur automatischen Erkennung von Materialdefekten wie Gaseinschlüssen, Porositäten sowie Einschlüsse von Materialien höherer Dichte in einem im Wesentlichen homogenen Werkstoff des Bauteils (12) eingerichtet ist.

13. Verfahren zum Betreiben einer Anlage nach Anspruch 1, **dadurch gekennzeichnet, dass** ein zu prüfendes Bauteil (12) in einem Ladebereich (61) an das Aufnahme- und/oder Haltemittel eines vertikal orientierten Stirnelements der Handhabungsvorrichtung übergeben wird, die Handhabungsvorrichtung von dem Ladebereich (61) linear in einer Zuführrichtung verschoben wird, bis das Bauteil (12) den Prüfbereich (78) erreicht hat, sodann die Handhabungsvorrichtung linear verschoben wird, um das Bauteil (12) zwecks Röntgenprüfung durch den Prüfbereich (78) zu fahren, und anschließend die Handhabungsvorrichtung von dem Prüfbereich (78) linear in einer der Zuführrichtung entgegengesetzten Abführrichtung verschoben wird, bis das Bauteil (12) zwecks Entladung den Ladebereich (61) erreicht hat.

## Claims

1. A system (10) for the automated serial testing and/or measuring of a plurality of substantially identical components (12) by X-radiation, comprising a testing device (11) with a support (17), a rotor (18) mounted so as to be continuously rotatable on the support (17), and an X-ray device (24, 25) disposed on the rotor (18), a protective enclosure (15) surrounding the testing device (11), a handling device (60) for handling a component (12) during X-ray testing, and a control/evaluation unit (14) configured for automatically controlling the system (10) as well as evaluating the X-ray signals by computer tomography, **characterized in that** the handling device (60) is configured for periodically reciprocating between a loading region (61) and a testing region (78) and comprises a vertically oriented end face element, i.e. a plate (64), said endface element providing an accommodating and/or retaining means on which the component (12) can be disposed on the side of the end face.

2. The system according to claim 1, **characterized in that** the handling device (60) is mounted on the side of the testing device (11), or testing plane E, opposite to the loading region (61).

3. The system according to claim 1 or 2, **characterized in that** the end face element is plate-shaped.

4. The system according to any one of the preceding claims, **characterized in that** the accommodating/retaining means comprises a supporting member (27) for the component.

5. The system according to any one of the preceding claims, **characterized in that** the accommodating/retaining means comprises a clamping holder and/or a gripping tool for gripping the component and/or a gripper.

6. The system according to any one of the preceding claims, **characterized in that** the accommodating/retaining means is height-adjustable relative to the end face element (64).

7. The system according to any one of the preceding claims, comprising a tube (43) extending through the rotor (18), **characterized in that** the end face element substantially extends over the entire cross section of the tube (43).

8. The system according to any one of the preceding claims, **characterized in that** the end face element (64) comprises on its outer circumference an, in particular annular, sealing member (80).

9. The system according to any one of the preceding claims, **characterized in that** the handling device (60) is mounted on the side of the testing device (11), or testing plane E, opposite to the loading region (61).

10. The system according to any one of the preceding claims, **characterized in that** the handling device (60) comprises a first moveable section (70) for conveying the component between the loading region (61) and the testing region (78) and a second independently moveable section (71) for the axial displacement of components (12) through the testing region (78) during the test.

11. The system according to claim 10, **characterized in that** the length of the displacing unit (60) can be changed in a telescoping fashion by means of the displaceable sections (70, 71).

12. The system according to any one of the preceding claim, wherein the control/evaluation unit (14) is configured for the automatic detection of material defects such as gas cavities, porosities, as well as of inclusions of materials of higher density in a substantially homogeneous material of the component (12).

13. A method for operating a system according to claim 1, **characterized in that** a component (12) to be tested is transferred in a loading region (61) to the handling device, which comprises a vertical oriented end face element providing an accommodating and/or retaining means for the component (12), the handling device is displaced in a linear manner in a feed direction from the loading region (61) until the component (12) has reached the testing region (78), the handling device is then displaced in a linear manner in order to move the component (12) through the testing region (78) for the purpose of X-ray testing, and then the handling device is displaced in a linear manner in a removal direction contrary to the feed direction from the testing region (78) until the component (12) has reached the loading region (61) for unloading.

## Revendications

1. Installation (10) de contrôle et/ou mesurage sériel automatisé d'une pluralité de composants (12) pour l'essentiel identiques au moyen de rayons X, comprenant un dispositif de contrôle (11) ayant un support (17), un rotor (18) logé sur ledit support (17) de manière à être continûment rotatif et un dispositif à rayons X (24, 25) disposé sur ledit rotor (18), une cabine de protection (15) entourant ledit dispositif de contrôle (11), un dispositif de manipulation (60) pour manipuler un composant (12) durant le contrôle par rayons X, ainsi qu'une unité de commande/d'évaluation (14) qui est conçue pour la commande automatisée de ladite installation (10) ainsi que pour l'évaluation tomodensitométrique des signaux de rayons X, **caractérisée par le fait que** le dispositif de manipulation (60) est conçu pour le mouvement périodique de va-et-vient entre une zone de chargement (61) et une zone de contrôle (78) et présente un élément frontal, comme par exemple une plaque (64), orienté verticalement, avec un moyen de réception et/ou de maintien qui est disposé sur celui-ci et sur lequel le composant (12) peut être disposé côté frontal.

2. Installation selon la revendication 1, **caractérisée par le fait que** ledit dispositif de manipulation (60) est logé du côté du dispositif de contrôle (11) ou bien plan de contrôle E, qui est opposé à ladite zone de chargement (61).

3. Installation selon la revendication 1 ou 2, **caractérisée par le fait que** ledit élément frontal présente une forme de plaque.

4. Installation selon l'une quelconque des revendications précédentes, **caractérisée par le fait que** ledit moyen de réception/de maintien comprend un appui (27) pour le composant.

5. Installation selon l'une quelconque des revendications précédentes, **caractérisée par le fait que** ledit moyen de réception/de maintien comprend un logement de serrage et/ou un outil de préhension pour saisir le composant et/ou un préhenseur.

6. Installation selon l'une quelconque des revendications précédentes, **caractérisée par le fait que** ledit moyen de réception/de maintien est réglable en hauteur par rapport à l'élément frontal.

7. Installation selon l'une quelconque des revendications précédentes, comprenant un tube (43) s'étendant à travers le rotor (18), **caractérisée par le fait que** ledit élément frontal s'étend pour l'essentiel sur l'ensemble de la section transversale dudit tube (43).

8. Installation selon l'une quelconque des revendications précédentes, **caractérisée par le fait que** ledit élément frontal présente sur sa circonférence extérieure un élément d'étanchéité (80) en particulier annulaire.

9. Installation selon l'une quelconque des revendications précédentes, **caractérisée par le fait que** ledit dispositif de manipulation (60) est logé du côté du dispositif de contrôle (11) ou bien plan de contrôle E, qui est opposé à ladite zone de chargement (61).

10. Installation selon l'une quelconque des revendications précédentes, **caractérisée par le fait que** ledit dispositif de manipulation (60) présente une première section (70) déplaçable pour le transport du composant entre la zone de chargement (61) et la zone de contrôle (78) ainsi qu'une deuxième section (71) indépendamment déplaçable pour le déplacement axial de composants (12) à travers la zone de contrôle (78) durant le contrôle.

11. Installation selon la revendication 10, **caractérisée par le fait que** la longueur de l'unité de déplacement (60) peut être modifiée de manière télescopique au moyen desdites sections (70, 71) déplaçables.

12. Installation selon l'une quelconque des revendications précédentes, dans laquelle ladite unité de commande/d'évaluation (14) est conçue pour la détection automatique de défauts de matériau, tels qu'inclusions gazeuses, porosités et inclusions de matières de densité plus importante dans un matériau pour l'essentiel homogène du composant (12).

13. Procédé pour opérer une installation selon la revendication 1, **caractérisé par le fait qu'**un composant (12) à contrôler est transféré, dans une zone de chargement (61), au moyen de réception et/ou de maintien d'un élément frontal orienté verticalement du dispositif de manipulation, ledit dispositif de manipulation est déplacé depuis la zone de chargement (61) linéairement suivant une direction d'amenée jusqu'à ce que le composant (12) ait atteint ladite zone de contrôle (78), que, ensuite, le dispositif de manipulation est déplacé linéairement afin de faire passer le composant (12) à travers la zone de contrôle (78) en vue du contrôle par rayons X, et que, ensuite, le dispositif de manipulation est déplacé depuis la zone de contrôle (78) linéairement suivant une direction d'évacuation opposée à la direction d'amenée, jusqu'à ce que le composant (12) ait atteint la zone de chargement (61) en vue du déchargement.
